# EUROPEAN PATENT APPLICATION

(11) **EP 4 550 875 A1**
(43) Date of publication of application: **07.05.2025**
(21) Application number: 23831946.1
(22) Date of filing: 30.06.2023
(51) Int. Cl.: H04W 28/02, G06N 20/00

(54) **METHOD AND APPARATUS FOR CONGESTION CONTROL IN WIRELESS COMMUNICATION SYSTEM**

(30) Priority: 01.07.2022 US 202263357649 P
(71) Applicant: LG Electronics Inc., Yeongdeungpo-gu Seoul 07336 (KR)
(72) Inventor: KIM, Laeyoung, Seoul 06772 (KR)
(74) Representative: Frenkel, Matthias Alexander
(86) International application number: PCT/KR2023/009227
(87) International publication number: WO 2024/005588

(57) **Abstract**

A method of operating a network function in a wireless communication system may comprise obtaining artificial intelligence (AI)/machine learning (ML) related information from an application function (AF), determining whether to perform congestion control on a first terminal based on the obtained **AI/ML** related information, receiving a non-access stratum (NAS) message from the first terminal, and performing congestion control based on the NAS message. Whether to perform congestion control on the first terminal may be determined based on whether the first terminal participates in **AI/ML** operation.

## Description

### Technical Field

The following description relates to a wireless communication system, and to a method and device for performing congestion control. Specifically, it relates to a method of determining whether to perform congestion control based on whether a terminal participates in AI/ML (artificial intelligence/machine learning) operation.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure relates to a method and device for performing congestion control in a wireless communication system.

The present disclosure relates to a method and device for obtaining AI/ML operation related information provided from an AF (application function) in a wireless communication system and performing congestion control based on whether a terminal participates in AI/ML operation.

The present disclosure relates to a method and device for performing congestion control based on whether multiple terminals participate in AI/ML operation in which a terminal participates in a wireless communication system.

The present disclosure relates to a method and device for performing congestion control based on whether a network function serves all multiple terminals participating in AI/ML operation in which a terminal participates in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method of operating a network function in a wireless communication system may comprise obtaining artificial intelligence (AI)/machine learning (ML) related information from an application function (AF), determining whether to perform congestion control on a first terminal based on the obtained AI/ML related information, receiving a non-access stratum (NAS) message from the first terminal, and performing congestion control based on the NAS message. Whether to perform congestion control on the first terminal may be determined based on whether the first terminal participates in AI/ML operation.

Also, as an example of the present disclosure, a network function operating in a wireless communication system may comprise at least one transceiver, at least one processor, and at least one memory operably connected to the at least one processor and configured to store instructions that, when executed, cause the at least one processor to perform a specific operation. The specific operation obtains artificial intelligence (AI)/machine learning (ML) related information from an application function (AF), determines whether to perform congestion control on a first terminal based on the obtained AI/ML related information, controls the at least one transceiver to receive a non-access stratum (NAS) message from the first terminal, and performs congestion control based on the NAS message. Whether to perform congestion control on the first terminal may be determined based on whether the first terminal participates in AI/ML operation.

Also, as an example of the present disclosure, a method of operating a terminal in a wireless communication system may comprise transmitting an NAS message to a network function and receiving a response message from the network function based on whether to perform congestion control on the terminal. The network function may obtain AI/ML related information from an AF and determine whether to perform congestion control on the terminal based on whether the terminal participates in AI/ML operation.

Also, as an example of the present disclosure, a terminal operating in a wireless communication system may comprise at least one transceiver, at least one processor, and at least one memory operably connected to the at least one processor and configured to store instructions that, when executed, cause the at least one processor to perform a specific operation. The specific operation may control the at least one transceiver such that the terminal transmits an NAS message to a network function; and control the at least one transceiver to receive a response message from the network function based on whether to perform congestion control on the terminal. The network function may obtain AI/ML related information from an AF and determine whether to perform congestion control on the terminal based on whether the terminal participates in AI/ML operation.

Also, as an example of the present disclosure, a device may comprise at least one memory and at least one processor functionally connected to the at least one memory. The at least one processor may control the device to obtain artificial intelligence (AI)/machine learning (ML) related information from an application function (AF), determine whether to perform congestion control on another device based on the obtained AI/ML related information, receive a non-access stratum (NAS) message from another device, and perform congestion control based on the NAS message. Whether to perform congestion control on another device may be determined based on whether another device participates in AI/ML operation.

Also, as an example of the present disclosure, a non-transitory computer-readable medium storing at least one instruction may comprise the at least one instruction executable by a processor. The at least one instruction may control a device to obtain artificial intelligence (AI)/machine learning (ML) related information from an application function (AF), determine whether to perform congestion control on another device based on the obtained AI/ML related information, receive a non-access stratum (NAS) message from another device, and perform congestion control based on the NAS message. Whether to perform congestion control on another device may be determined based on whether another device participates in AI/ML operation.

In addition, the following may be applied commonly.

Also, as an example of the present disclosure, based on the first terminal being a terminal that does not participate in AI/ML operation, the network function may determine whether to perform congestion control on the first terminal by considering a network load, and based on the first terminal being a terminal participating in the AI/ML operation, the network function may determines whether to perform congestion control on the first terminal by considering whether there are multiple terminals participating in the AI/ML operation and whether the network function serves multiple terminals.

Also, as an example of the present disclosure, based on a terminal participating in the AI/ML operation being only the first terminal, whether to perform congestion control on the first terminal may be determined regardless of the AI/ML operation related information.

Also, as an example of the present disclosure, based on there being multiple terminals participating in the AI/ML operation and the network function serving all the multiple terminals, the network function may determine whether to perform congestion control on the first terminal by reflecting the AI/ML related information and state information of other terminals.

Also, as an example of the present disclosure, the network function may be an access and mobility management function (AMF), and based on the state information of the other terminals and the other terminals being in any one of CM-IDLE and user plane deactivation of AI/ML operation related protocol data unit (PDU), the AMF may determine whether to perform congestion control on multiple terminals based on a possibility of transmitting an NAS message.

Also, as an example of the present disclosure, based on the congestion control being performed on the multiple terminals, the AMF may set a backoff timer value for each of the multiple terminals so that transmission delay termination time points of the multiple terminals are the same and transmit the backoff timer value to each of the multiple terminals.

Also, as an example of the present disclosure, based on the other terminals being in any one of CM-CONNECTED and user plane activation of AI/ML operation related protocol data unit (PDU), the AMF may determine not to perform congestion control on the first terminal based on the possibility of transmitting the NAS message.

Also, as an example of the present disclosure, the network function may be a session management function (SMF) and based on whether the NAS message transmitted by the first terminal being associated with a PDU session of AI/ML operation, the SMF may determine whether the first terminal participates in the AI/ML operation.

Also, as an example of the present disclosure, the SMF may determine a possibility of transmitting an NAS message based on quality of service (QoS) flows included in PDU sessions used by the other terminals for the AI/ML operation as state information of the other terminals, and the SMF may determine to perform congestion control on multiple terminals based on the possibility of transmitting the NAS message.

Also, as an example of the present disclosure, based on the congestion control being performed on the multiple terminals, the SMF may set a backoff timer value for each of the multiple terminals so that transmission delay termination time points of the multiple terminals are the same and transmit the backoff timer value to each of the multiple terminals.

Also, as an example of the present disclosure, based on multiple terminals participating in the AI/ML operation and the network function serving only some of the multiple terminals, the network function may determine not to perform congestion control on the first terminal based on the AI/ML related information.

Also, as an example of the present disclosure, based on multiple terminals participating in the AI/ML operation and the network function serving only some of the multiple terminals, the network function may determine whether to perform congestion control on the first terminal based on the AI/ML related information and AI/ML operation importance information.

Also, as an example of the present disclosure, the AI/ML information may include at least one of identification information of a terminal participating in AI/ML operation, AI/ML operation start time information, AI/ML operation required time information, AI/ML operation end time information, or AI/ML operation importance information.

Also, as an example of the present disclosure, at least one information included in the AI/ML related information may be sent to a core network at the same time.

Also, as an example of the present disclosure, some information of at least one information included in the AI/ML related information may be sent to the core network at a first time point, and the other information may be sent to the core network at a second time point.

### Advantageous Effects

The present disclosure can provide a method of performing congestion control in a wireless communication system.

The present disclosure can provide a method of obtaining AI/ML operation related information provided from an AF in a wireless communication system and performing congestion control based on whether a terminal participates in the AI/ML operation.

The present disclosure can provide a method of performing congestion control based on whether multiple terminals participate in AI/ML operation in which a terminal participates in a wireless communication system.

The present disclosure can provide a method of performing congestion control based on whether a network function serves all multiple terminals participating in AI/ML operation in which a terminal participates in a wireless communication system.

The present disclosure has the effect of preventing the AI/ML operation from being delayed or adversely affected based on congestion control operation in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view showing an example of a communication system applicable to the present disclosure.
FIG. 2 is a view showing an example of a UE to which the implementation of the present disclosure is applied.
FIG. 3 is a view showing an example of functional separation of a general NG-RAN and 5^{th} generation core (5GC).
FIG. 4 is a view showing an example of a general architecture of a 5^{th} generation (5G) system.
FIG. 5 is a diagram showing an AI/ML-based endpoint splitting operation applicable to the present disclosure.
FIG. 6 is a diagram showing an AI/ML model distribution method applicable to the present disclosure.
FIG. 7 is a diagram showing a method of performing federated learning-based learning applicable to the present disclosure.
FIG. 8 is a diagram showing a method of performing congestion control in a network function applicable to the present disclosure.
FIG. 9 is a diagram showing a method of performing congestion control in a network function applicable to the present disclosure.
FIG. 10 is a diagram showing a method of performing congestion control in a network function applicable to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

**That** is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### Communication system applicable to the present disclosure

Although not limited thereto, various descriptions, functions, procedures, proposals, methods and/or operating flowcharts of the present disclosure disclosed herein may be applied to various fields requiring wireless communication/connection (e.g., 5G) between devices.

Hereinafter, more detailed illustrations will be presented with reference to drawings. In the drawings/description below, unless otherwise mentioned, the same drawing symbol may illustrate the same or corresponding hardware block, software block or functional block.

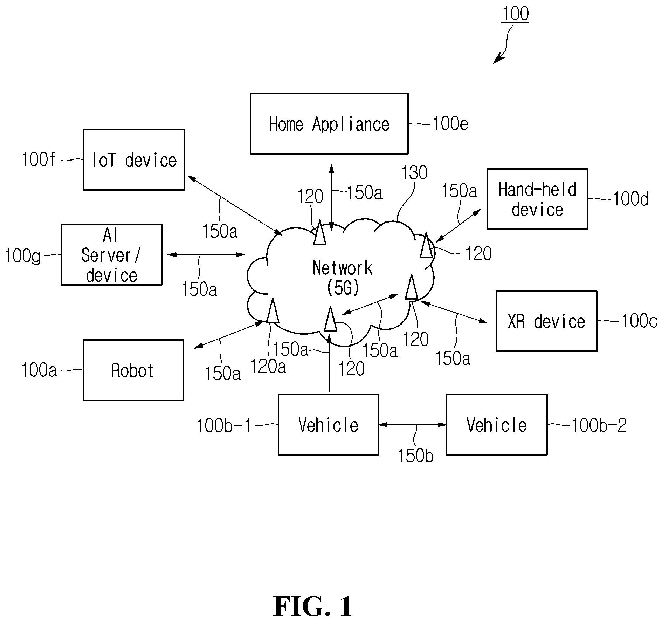

FIG. 1 is a view showing an example of a communication system applied to the present disclosure.

Referring to FIG. 1, a communication system 100 applied to the present disclosure includes a wireless device, a base station, and a network. Herein, the wireless device means a device performing communication using a wireless connection technology (e.g., 5G NR, LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, a vehicle may include a vehicle equipped with a wireless communication function, an autonomous driving vehicle, a vehicle capable of performing vehicle-to-vehicle communication, and the like. Herein, the vehicles 100b-1 and 100b-2 may include an unmanned aerial vehicle (UAV) (e.g., drone). The XR device 100c may include an augmented reality (AR)/virtual reality (VR)/mixed reality (MR) device and may be embodied in forms of a head-up display (HUD) installed in a vehicle, a television, a smartphone, a computer, a wearable device, a home appliance, digital signage, a vehicle, a robot, and the like. The hand-held device 100d may include a smartphone, a smart pad, a wearable device (e.g., a smart watch, smart glasses), a computer (e.g., a notebook and the like) and the like. The home appliance 100e may include a TV, a refrigerator, a washing machine, and the like. The IoT device 100f may include a sensor, a smart meter, and the like. For example, the base station 120 and the network 130 may be embodied as wireless devices, and a specific wireless device 120a may operate as a base station/network node to another wireless device.

The wireless devices 100a to 100f may be connected to the network 130 via the base station 120. AI technology may be applied to the wireless devices 100a to 100f, and the wireless devices 100a to 100f may be connected to the AI server 100g through the network 130. The network 130 may be constructed using a 3G network, a 4G(e.g., LTE) network or a 5G(e.g., NR) network. The wireless devices 100a to 100f may communicate with each other through the base station 120/the network 130 but perform direct communication (e.g., sidelink communication) not through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may communicate directly with another IoT device (e.g., a sensor) or another wireless device 100a to 100f.

Wireless communication/connection 150a, 150b and 150c may be made between the wireless devices 100a to 100f/the base station 120 and the base station 120/the base station 120. Herein, wireless communication/connection may be performed through various wireless connection technologies (e.g., 5G NR) such as uplink/downlink communication 150a, sidelink communication 150b (or D2D communication), and base station-to-base station communication 150c (e.g., relay, integrated access backhaul (IAB)). A wireless device and a base station/a wireless device and a base station and a base station may transmit/receive radio signals through the wireless communication/connections 150a, 150b and 150c. For example, the wireless communication/connections 150a, 150b and 150c may transmit/receive a signal through various physical channels. To this end, based on various proposals of the present disclosure, at least a part of various processes of setting configuration information for transmission/reception of a radio signal, various processes of processing a signal (e.g., channel encoding/decoding, modulation/demodulation, resource mapping/demapping, and the like), and a resource allocation process may be performed.

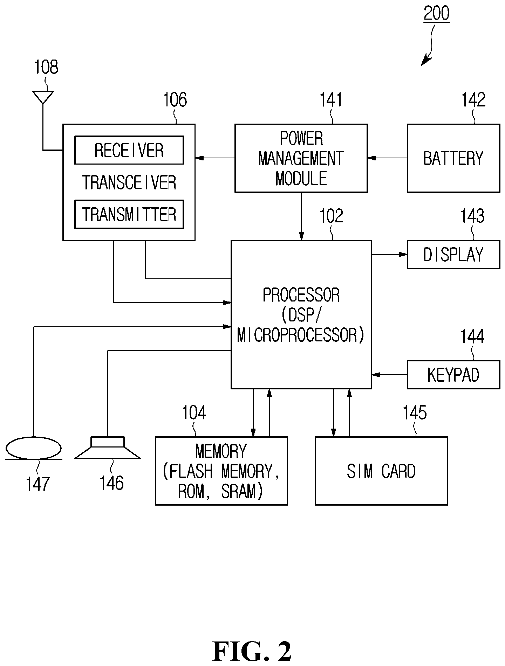

FIG. 2 is a view showing an example of a UE to which the implementation of the present disclosure is applied.

Referring to FIG. 2, a UE 200 may include a processor 202, a memory 204, a transceiver 206, one or more antennas 208, a power management module 241, a battery 242, a display 243, a keypad 244, a subscriber identification module (SIM) card 245, a speaker 246, and a microphone 247.

The processor 202 may be configured to implement a description, a function, a procedure, a proposal, a method and/or an operating flowchart disclosed in the present specification. The processor 202 may be configured to control one or more different components of the UE 200 to implement a description, a function, a procedure, a proposal, a method and/or an operating flowchart disclosed in the present specification. A layer of a wireless interface protocol may be embodied in the processor 202. The processor 202 may include an ASIC, other chipsets, a logic circuit and/or a data processing device. The processor 202 may be an application processor. The processor 202 may include at least one of a DSP, a central processing unit (CPU), a graphics processing unit (GPU), and a modem (modulator and demodulator).

The memory 204 may be coupled operably with the processor 202 and store various information for operating the processor 202. The memory 204 may include a ROM, a RAM, a flash memory, a memory card, a storage medium and/or another storage device. In case of implementation in software, a technology described herein may be implemented using a module (e.g., a procedure, a function, and the like) executing a description, a function, a procedure, a proposal, a method and/or an operating flowchart disclosed in the present specification. The module may be stored in the memory 204 and be executed by the processor 202. The memory 204 may be embodied in the processor 202 or outside the processor 202 in which case the memory 204 may be communicatively coupled with the processor 202 through various methods known in technology.

The transceiver 206 may be operably coupled with the processor 202 and transmit and/or receive a radio signal. The transceiver 206 may include a transmitter and a receiver. The transceiver 206 may include a baseband circuit for processing a radio frequency signal. The transceiver 206 may transmit and/or receive a radio signal by controlling the one or more antennas 208.

The power management module 241 may manage the power of the processor 202 and/or the transceiver 206. The battery 242 may supply power to the power management module 241.

The display 243 may output a result processed by the processor 202. The keypad 244 may receive an input to be used in the processor 202. The keypad 244 may be displayed on the display 243.

The SIM card 245 is an integrated circuit for safely storing an international mobile subscriber identity (IMSI) and a relevant key and may be used to identify and authenticate a subscriber in a hand-held telephone device like a mobile phone or a computer. In addition, contact information may be stored in many SIM cards.

The speaker 246 may output a sounded-related result processed in the processor 202. The microphone 247 may receive a sounded-related input to be used in the processor 202.

In an implement of the present specification, a UE may operate as a transmitting device in an uplink and a receiving device in a downlink. In an implement of the present specification, a base station may operate as a receiving device in a UL and a transmitting device in a DL. In the present specification, a base station may be referred to as a node B (Node B), an eNode B (eNB), and a gNB and may not be limited to a specific form.

In addition, as an example, a UE may be embodied in various forms according to a use example/service. A UE may be configured by various components, devices/parts and/or modules. For example, each UE may include a communication device, a control device, a memory device, and an addition component. A communication device may a communication circuit and a transceiver. For example, a communication circuit may include one or more processors and/or one or more memories. For example, a transceiver may include one or more transceivers and/or one or more antennas. A control device may be electrically coupled with a communication device, a memory device and an additional component and control an overall operation of each UE. For example, a control device may control an electric/mechanical operation of each UE based on a program/a code/an instruction/information stored in a memory device. A control device may transmit information stored in a memory device to the outside (e.g., another communication device) via a communication device through a wireless/wired interface or store information received from the outside (e.g., another communication device) through the wireless/wired interface in the memory device.

An additional component may be configured in various ways according to a type of a UE. For example, an additional component may include at least one of a power device/battery, an input/output (I/O) device (e.g., an audio I/O port, a video I/O port), a driving device, and a computing device. In addition, without being limited thereto, a UE may be embodied in forms of the robot 100a of FIG. 1, the vehicles 100b-1 and 100b-2 of FIG. 1, the XR device 100c of FIG. 1, the hand-held device 100d of FIG. 1, the home appliance 100e of FIG. 1, the IoT device 100f of FIG. 1, a digital broadcast terminal, a hologram device, a public safety device, an MTC device, a medical device, a fintech device (or financial device), a security device, a climate/environment device, the AI server/device 100g of FIG. 1, the base station 120 of FIG. 1, and a network node. A UE may be used a mobile or fixed place according to a use example/service.

Various components, devices/parts and/or all the modules of a UE may be connected to each other through a wired interface, or at least a part thereof may be wirelessly connected through a communication device. In addition, each component, a device/a part and/or a module of a UE may further include one or more components. For example, a control device may be configured by a set of one or more processors. As an example, a control device may be configured by a set of a communication control processor, an application processor (AP), an electronic control unit (ECU), a GPU, and a memory control processor. As anther example, a memory device may be configured by a RAM, a dynamic RAM (DRAM), a ROM, a flash memory, a volatile memory, a non-volatile memory, and/or a combination thereof.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

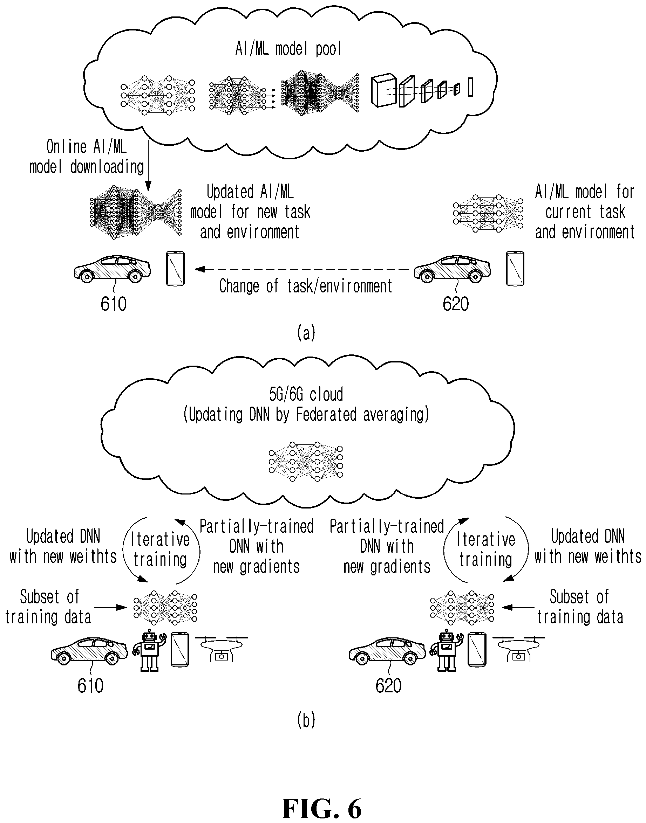

5GC (5G Core) may include various components, part of which are shown in FIG. 6, including an access and mobility management function (AMF), a session management function (SMF), a policy control function (PCF), a Prose user plane function (UPF), an application function (AF), unified data management (UDM), and a non-3GPP interworking function (N3IWF).

A UE is connected to a data network via the UPF through a next generation radio access network (NG-RAN) including the gNB. The UE may be provided with a data service even through untrusted non-3GPP access, e.g., a wireless local area network (WLAN). In order to connect the non-3GPP access to a core network, the N3IWF may be deployed.

The N3IWF performs a function of managing interworking between the non-3GPP access and the 5G system. When the UE is connected to non-3GPP access (e.g., WiFi referred to as IEEE 801.11), the UE may be connected to the 5G system through the N3IWF. The N3IWF performs control signaling with the AMF and is connected to the UPF through an N3 interface for data transmission.

The AMF may manage access and mobility in the 5G system. The AMF may perform a function of managing (non-access stratum) NAS security. The AMF may perform a function of handling mobility in an idle state.

The UPF performs a function of gateway for transmitting and receiving user data. The UPF node 440 may perform the entirety or a portion of a user plane function of a serving gateway (S-GW) and a packet data network gateway (P-GW) of 4G mobile communication.

The UPF is a component that operates as a boundary point between a next generation radio access network (NG-RAN) and the core network and maintains a data path between the gNB and the SMF. In addition, when the UE moves over an area served by the gNB, the UPF serves as a mobility anchor point. The UPF may perform a function of handling a PDU. For mobility within the NG-RAN (which is defined after 3GPP Release-15), the UPF may route packets. In addition, the UPF may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF may correspond to a termination point of a data interface toward the data network.

The PCF is a node that controls an operator's policy. The AF is a server for providing various services to the UE. The UDM is a server that manages subscriber information, such as home subscriber server (HSS) of 4G mobile communication. The UDM stores and manages the subscriber information in a unified data repository (UDR).

The SMF may perform a function of allocating an Internet protocol (IP) address of the UE. In addition, the SMF may control a packet data unit (PDU) session.

For convenience of explanation, hereinafter, reference numerals may be omitted for AMF, SMF, PCF, UPF, AF, UDM, N3IWF, gNB, or UE, which may operate with reference to contents described in standard documents released earlier than the present document.

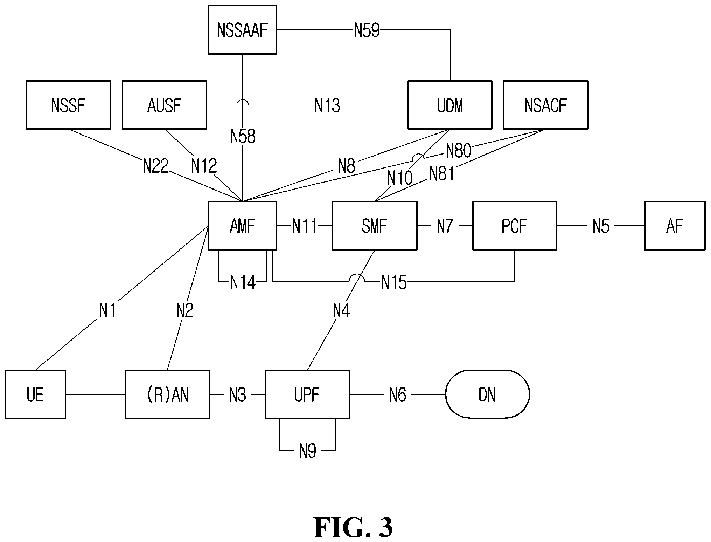

FIG. 3 is a view showing an example of expressing the structure of a wireless communication system applied to the present disclosure from a node perspective.

Referring to FIG. 3, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 3 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

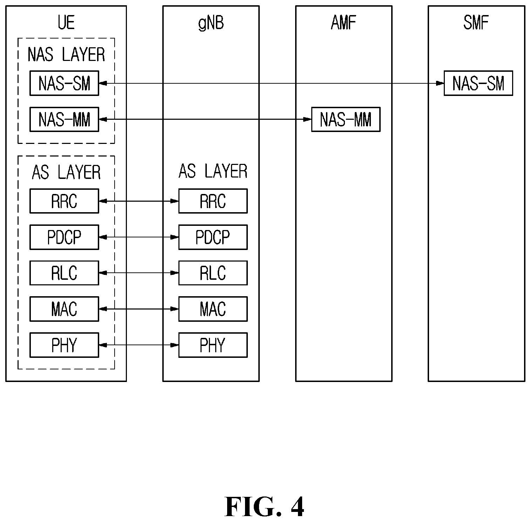

Hereinafter, the present disclosure describes each layer of a wireless protocol. FIG. 4 is a view showing an example of the structure of a radio interface protocol between a UE and a gNB.

Referring to FIG. 4, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

AI/ML technology may be applied to an application layer and a network layer. As AI/ML technology, deep learning technology may be applied to the field of wireless resource management and allocation, but may not be limited thereto. In addition, AI/ML technology may also be applied to the MAC layer and physical layer, and in particular, attempts are being made to combine deep learning with wireless transmission at the physical layer.

For example, AI/ML algorithms based on deep learning in a machine learning manner may require a large amount of training data to optimize training parameters. However, there may be limitations in obtaining data in a specific channel environment as training data, and a method of applying AI/ML technology to a network while taking this into consideration will be described below.

Machine learning refers to a series of operations that train a machine to create a machine that can perform tasks that are difficult or impossible for humans to perform. Machine learning requires data and a learning model. In machine learning, data learning methods may be largely divided into three: supervised learning, unsupervised learning, and reinforcement learning. Neural network learning is to minimize output errors. Neural network learning is a process of repeatedly inputting training data to a neural network, calculating error between the target and the output of the neural network for the training data, and backpropagating the error of the neural network from the output layer of the neural network to the input layer in the direction of reducing the error, thereby updating the weight of each node of the neural network. Supervised learning uses training data with correct answers labeled, and unsupervised learning may not use training data without correct answers labeled. That is, for example, in the case of supervised learning for data classification, the training data may be data in which each training data is labeled with a category. The labeled training data is input to the neural network, and the error may be calculated by comparing the output (category) of the neural network with the label of the training data. The calculated error is backpropagated from the neural network in the reverse direction (i.e., from the output layer to the input layer), and the connection weight of each node in each layer of the neural network may be updated according to the backpropagation. The amount of change in the connection weight of each node to be updated may be determined according to the learning rate. The neural network's calculation of the input data and the backpropagation of the error may constitute a learning cycle (epoch). The learning rate may be applied differently according to the number of repetitions of the learning cycle of the neural network. For example, in the early stage of learning of the neural network, a high learning rate may be used so that the neural network can quickly acquire a certain level of performance, thereby increasing efficiency, and in the later stage of learning, a low learning rate may be used to increase accuracy. In addition, as an example, the learning method may vary depending on the characteristics of the data. For example, if the purpose is to accurately predict data transmitted from a transmitter in a communication system at a receiver, it is preferable to perform learning using supervised learning rather than unsupervised learning or reinforcement learning. The learning model corresponds to the human brain, and the most basic linear model may be considered, but the machine learning paradigm that uses a highly complex neural network structure such as an artificial neural network as a learning model may be called deep learning. The neural network core used as a learning method may largely include deep neural networks (DNN), convolutional deep neural networks (CNN), and recurrent Boltzmann machines (RNN), and these learning models may be applied.

Hereinafter, a method of performing AI/ML service and application support and AI/ML traffic transmission through the support of 5GS considering the above-described AI/ML technology will be described. For example, learning may be performed on a learning model based on the AI/ML technology, and inference may be performed through the learning model on which learning has been performed. Here, the network may support the above-described learning and inference operations. As a more specific example, the AI/ML operation of the application layer may support the operations of Table 1 below. Referring to Table 1 below, the AI/ML task division point of the AI/ML endpoint may be determined considering the relationship between entities. As another example, the AI/ML model and data may be distributed and shared through 5GS. As another example, 5GS may support federated learning (FL) and may apply model parameters of FL, but may not be limited thereto.

| |
|---|
| **- AI/ML operation splitting between AI/ML endpoints;** |
| **- AI/ML model/data distribution and sharing over 5G system;** |
| **- Distributed/Federated Learning over 5G system.** |

In addition, the network may support network resource utilization monitoring operations to support AI/ML functions of the application layer. In addition, the network may perform support by determining whether to expose information acquired to support AI/ML functions (e.g., location, QoS, load, congestion, etc.) and to which entity to expose the information. In addition, the network may acquire and manage information to support AI/ML functions, and is not limited to a specific embodiment.

As another example, the network may support federated learning (FL) and apply model parameters of the FL. That is, the model parameters of the FL may be adapted to the communication environment and signal transmission may be performed. The network may perform at least one of the functions of protecting personal privacy, reducing the load of the base station through distributed processing, or reducing traffic between the base station and the terminal through the FL, but may not be limited thereto. For the above-described operation, the network may set FL model parameters and transmit the set FL model parameters to a plurality of terminals. Then, each of the plurality of terminals may update the acquired model parameters based on the acquired training data, and transmit the updated model parameter information to the network. The network may finally update the model parameters based on the model parameter information acquired from each of the plurality of terminals. However, in the above-described process, since local model parameter transmission and reception are required between the network and the terminals, the traffic of the local model parameters may cause a lot of burden in the wireless communication environment, and a method for solving this will be described.

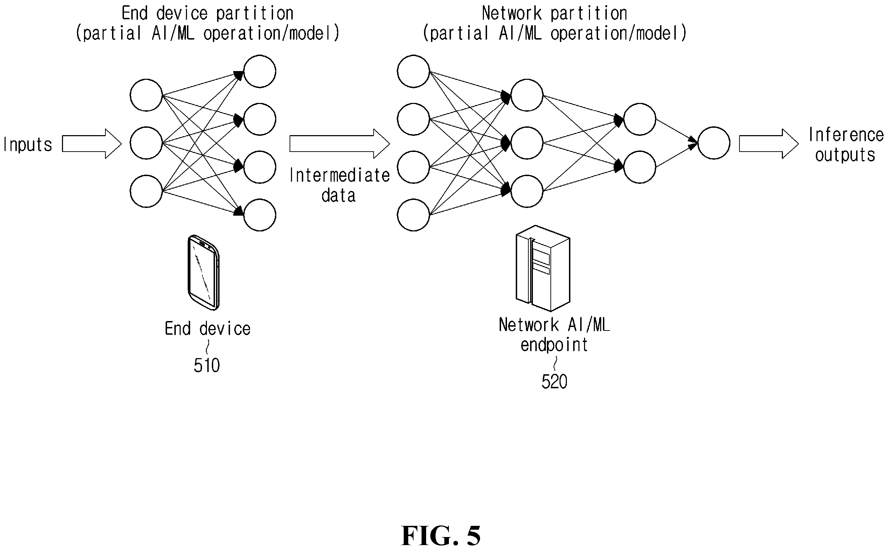

FIG. 5 is a diagram showing an AI/ML-based endpoint splitting operation applicable to the present disclosure. AI/ML may be used in a range of application domains and may replace existing algorithms (e.g., voice recognition, image recognition, video processing, etc.) of devices (e.g., smartphones, vehicles, robots, etc.) within a communication system. For example, the communication system may support at least one of AI/ML operation splitting between AI/ML endpoints of Table 1 described above, distribution/sharing of AI/ML models/data via the communication system, or FL support via the communication system.

Here, referring to FIG. 5, AI/ML operation splitting for AI/ML inference may be considered. AI/ML operation/model may be split into multiple parts considering the current task and environment. Specifically, an endpoint (e.g. terminal) may transfer computation-intensive operation and energy-intensive operation to the network part, and directly process privacy-sensitive operation and delay-sensitive operation. More specifically, partial AI/ML operation/model may be located in an end device 510 and a network AI/ML endpoint 520, respectively. That is, the entire AI/ML model is not configured in one entity, but may be split and located in multiple entities. Here, when inference is performed based on the AI/ML model, the input may be provided as an input of the AI/ML operation/model part in the end device 510. Thereafter, intermediate data may be derived as output from the corresponding AI/ML operation/model portion by the end device 510. The intermediate data may be sent to the network AI/ML endpoint(520 and provided as input to the AI/ML operation/model part within the network. The AI/ML operation/model part within the network may derive final inference output data based on the provided input. That is, the AI/ML operation/model may be split into each entity and perform an appropriate operation considering the task and environment of each entity.

FIG. 6 is a diagram showing an AI/ML model distribution method applicable to the present disclosure. For example, a device with various functions (e.g., a smartphone, a vehicle, a robot, etc.) needs to use multiple AI/ML models in consideration of the task and environment. In other words, the device needs to switch to a suitable AI/ML model and apply it in consideration of the task and environment. Here, since the storage space of the device may be limited, it may not be desirable to configure all candidate AI/ML models in the device. In consideration of the above, the candidate AI/ML models as multiple AI/ML models may be configured as an AI/ML model pool. For example, the AI/ML model pool may be provided in a network and may be distributed from a network endpoint to the device. To this end, a device 610 may continuously monitor the performance of the AI/ML model. As a more specific example, referring to FIG. 6(a), the first device 610 may receive an AI/ML model update request from the second device 620, and acquire a suitable AI/ML model through a network endpoint based on the AI/ML model update request. Here, a second device 620 may continuously monitor the AI/ML model, and if the AI/ML model is not suitable in consideration of new tasks and environments, the second device 620 may request an AI/ML model update from the first device 610. The first device 610 may acquire a suitable AI/ML model from the network, and send information about the same to the second device 620.

As another example, referring to FIG. 6(b), a DNN (deep neural network) by FL may be present in the cloud. Here, model information for the DNN may be sent to the first device 610. The first device 610 may perform some training on the DNN with a subset of training data based on the model information, and send new gradient information to the cloud. The above-described cycle may be repeated, and thereby the DNN by FL in the cloud may be updated. In addition, the model information of the DNN may also be sent to the second device 620. The second device 620 may perform some training on the DNN with the subset of training data based on the model information, and transmit new gradient information to the cloud. The above-described cycle may be repeated, and thereby the DNN by FL in the cloud may be updated. That is, the cloud may obtain updated learning model information based on training data possessed by each of the multiple devices 610 and 620 and synthesize the information to update the overall model information. For example, the device may apply training data to a local model built based on the sent model information and send the gradient to the cloud, and the cloud may update the global model based on the gradient received from the device.

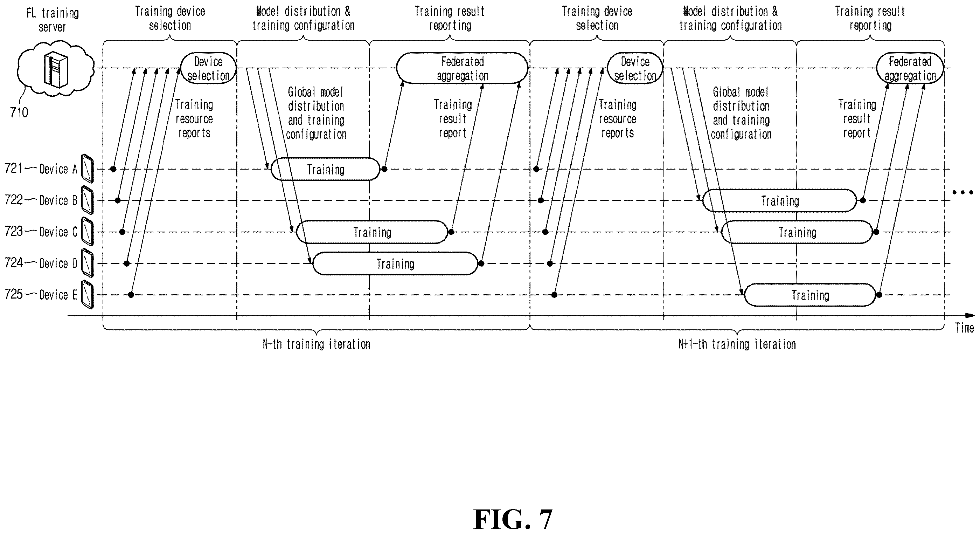

FIG. 7 is a diagram showing a method of performing federated learning-based learning applicable to the present disclosure. Referring to FIG. 7, a FL training server 710 may determine at least one terminal participating in FL learning (or operation). For example, the FL training server 710 may be configured in a network, but may not be limited thereto. Referring to FIG. 7, learning by the FL training server 710 may be iterated at regular intervals. For example, in the N-th learning iteration at a specific interval, the FL training server 710 may receive a training resource report from at least one terminals 721, 722, 723, 724 and 725. The training resource report may include information related to FL training in each of at least one terminals 721, 722, 723, 724 and 725, and may not be limited to a specific form. The FL training server 710 may select a terminal to perform learning in a given cycle based on training resource report information acquired from each of at least one terminals 721, 722, 723, 724 and 725. For example, terminal A 721, terminal C 723, and terminal D 724 may be selected in the N-th learning iteration of FIG. 7, but this is only one example for convenience of explanation and may not be limited thereto. For example, the FL training server 710 may send global model and learning configuration information to terminals 721, 723 and 724 selected in model distribution and training configuration. The global model is a learning model constructed based on FL, and the selected terminals 721, 723 and 724 may construct a local model based on the global model information. Thereafter, each of the selected terminals 721, 723 and 724 may perform learning by applying the acquired training data to the built local model, and report the training result to the FL training server 710. For example, the training result may be a gradient for the DNN, but may not be limited thereto. The FL training server 710 may receive training result reports from each of the selected terminals 721, 723 and 724 in the training result reporting step and update the global model. For example, the terminals participating in the FL operation (or learning) provide a training result report to the FL training server 710 at a preset time for each learning iteration, and the next learning iteration may be initiated based on this. The above-described operation may be iterated for each learning iteration. Here, for example, if the learning environment or conditions (e.g., computing resources of the device, wireless channel conditions, other services of the learning device, etc.) do not change, learning terminal reselection and training reconfiguration may not be required for each learning iteration in which learning is performed. That is, learning terminals of the same group may participate in learning with the same configuration through multiple iterations. However, for example, independent and identical sampling achievement from all terminals may be required, and considering the above-described points, learning terminals may be configured differently depending on the iteration, but may not be limited thereto.

Here, as an example, the following describes a method of applying NAS (non-access stratum) level congestion control to a terminal participating in FL operation (or learning) (or a terminal selected for FL operation (or learning)).

As a specific example, a terminal participating in the FL operation (or learning) needs to provide training results to the server for each learning iteration, but may not be able to provide the training results to the server at a preset timing based on network congestion. In the above-described case, the FL training server may not be able to terminate the learning iteration, resulting in a delay or exceeding the preset time. Here, if the FL training server does not obtain the training result from the terminal, the FL training server may perform a global model update or FL model aggregation without the result, which may adversely affect FL model convergence. As an example, the terminal may obtain a backoff timer value based on NAS level congestion control to postpone signal reception, and the above-described delay may occur based on this. Here, the backoff timer value may be several (tens) minutes or several (tens) hours, but may not be limited thereto. That is, since the network conditions of the communication system (e.g., network congestion conditions, etc.) may affect the operation of AI/ML services/applications, a method of effectively supporting AI/ML services by considering the characteristics of AI/ML services may be necessary, which will be described below.

For example, based on NAS level congestion control, the network may provide the backoff timer value to the terminal, and the terminal may postpone signal transmission based on the backoff timer value. The network may determine the backoff timer differently for each terminal, so that each terminal may transmit a signal at a different timing after the backoff timer. That is, a terminal that has received the backoff timer may not transmit an NAS signal unless the backoff timer expires, a request is received from the network, or a service with a high priority shall be performed.

For example, in a network overload situation, the AMF may reject an NAS message from a terminal using a 5G access network. If the NAS request is rejected, the AMF may send a mobility management backoff timer to the terminal. The terminal may not initiate any other NAS requests until the backoff time expires, except for deregistration procedures or procedures that are not affected by congestion control (e.g., high priority access, emergency services) and mobile end services.

Here, as an example, if the terminal performs a deregistration procedure while the backoff timer is running, the backoff timer may continue to run even after the deregistration procedure. In addition, as an example, if the terminal is already in a CM-CONNECTED state while the backoff timer is running, the terminal may perform a mobility registration update. In addition, if the terminal receives a paging request or an NAS notification message from the AMF while the backoff timer is running, the terminal may stop the backoff timer and start a service request procedure or a mobility registration update procedure through a corresponding access.

Also, as an example, if the terminal is in a CM-IDLE state and has not left a registration area, the terminal may transmit a service request message indicating that the message is excluded from NAS congestion control. As another example, if the terminal is in a CM-IDLE state and has left the registration area, the terminal may transmit a mobility registration update request message including a request indicating that the message is excluded from NAS congestion control.

As another example, if the terminal is in a CM-CONNECTED state, the terminal may transmit a PDU session modification request with PS data off state change via a UL NAS Transport message while the backoff timer continues. Here, the message may be transmitted with an indication that it is excluded from NAS congestion control.

In addition, when NAS MM (mobility management) congestion control is activated in the AMF, if the terminal transmits an NAS MM message indicating that it is excluded from NAS congestion control to the AMF, the AMF may not reject the NAS MM message but may forward an NAS SM (session management) message to a corresponding SMF. Here, the forwarded message may be forwarded with an indication indicating that it is excluded from NAS congestion control. The SMF may confirm that the NAS SM message is not subject to congestion control, and may reject the message if it is subject to congestion control. In addition, as an example, mobility management backoff timer may not be stopped even if cell/RAT/access type and PLMN change are performed. That is, cell/RAT/TA/access type change may not stop the mobility management backoff timer.

As another example, if a 5GSM core network function change or an always-on PDU session request indication needs to be reported while the NAS MM congestion control timer of the terminal is running and MM signaling cannot be initiated, the terminal may postpone initiating the related MM signaling until the MM congestion control timer expires. In addition, if a reserved communication pattern is present in the terminal, the AMF may select a backoff timer value considering the communication pattern of the terminal, so that the terminal does not miss the reserved pattern.

Also, if the terminal is in a CM-CONNECTED state, the AMF may not reject the registration request message for mobility registration update. On the other hand, the AMF may reject the service request message transmitted by the terminal already in the CM-CONNECTED state and the UL NAS transmission message containing the mobility management backoff timer.

As another example, if the terminal receives a DL NAS transmission message from the AMF while the backoff timer is still running, the backoff timer may be stopped. In addition, considering CM-IDLE mobility, the AMF may reject a registration request for mobility registration update by transmitting a registration rejection message including the mobility management backoff timer to the terminal.

For example, as described above, a backoff timer value is provided to the terminal, and the terminal may perform NAS level congestion control by postponing reception of the NAS messages based on the backoff timer value.

As another example, DNN (data network name)-based congestion control may be performed. For example, the SMF may reject a PDU session setup request message or a PDU session modification request message except for the purpose of reporting a PS data off state change for a specific DNN for which a backoff timer is running. Through this, DNN-based congestion control may be applied to the terminal. In addition, as an example, the SMF may transmit a PDU session release command message with a DNN backoff timer to the terminal to release a PDU session belonging to a congested DNN. For example, if the DNN backoff timer is included in the PDU session release command message, a reactivation request may not be set as a reason value.

As another example, when the network data analytic function (NWDAF) is configured, the SMF may determine a backoff timer to be provided to the terminals based on session management congestion control information provided from the NWDAF. For example, when the DNN backoff timer is activated, the terminal may not initiate a session management procedure for a congested DNN. On the other hand, the terminal may perform a session management procedure for another DNN. For example, when there is no DNN associated with the backoff timer, the terminal may initiate a session management request of all PDU session types for a specific DNN. In addition, as an example, in case of cell/TA/PLMN/RAT change, change of unreliable non-3GPP access network, or change of access type, the terminal may not stop the backoff timer. That is, the DNN backoff timer may operate regardless of the above-described procedure.

As another example, even when the DNN backoff timer is activated, the terminal may initiate a session management procedure for high priority access and emergency services. In addition, the terminal may initiate a session management procedure to report a data off state change to the network. In addition, as an example, if the terminal receives a network-initiated session management message other than a PDU session release command for the congested DNN associated with the backoff timer, the terminal may stop the backoff timer and respond to the network. In addition, if the terminal receives a PDU session release command message for a congested DNN, the terminal may stop the backoff timer unless it receives a new backoff timer from the SMF. The terminal may initiate a PDU session release procedure and may not stop the backoff timer when the associated PDU session is released.

In addition, as an example, S-NSSAI (single network slice selection assistance information)-based congestion control may be performed. S-NSSAI-based congestion control may be applied to handle NAS signal congestion of a terminal having a backoff timer associated with S-NSSAI regardless of the presence of DNN. For example, if S-NSSAI is determined to be in a congested state, the SMF may apply S-NSSAI-based congestion control to the terminal for SM requests excluding PS data off state change reports, and may provide a backoff timer and a home public land mobile network (HPLMN) congestion indication. If the terminal receives an S-NSSAI-based backoff timer without an HPLMN congestion indication, the terminal may apply the S-NSSAI backoff timer only to the PLMN from which the backoff time was received. On the other hand, if the terminal receives an S-NSSAI-based backoff timer together with an HPLMN congestion indication, the terminal may apply the S-NSSAI-based backoff timer to both the PLMN from which the backoff time was received and other PLMNs. As another example, the SMF may release a PDU session belonging to a congested S-NSSAI. Here, the SMF may send a PDU session release request message to the terminal, which includes a backoff timer associated with the S-NSSAI or a combination of the S-NSSAI and a specific DNN. For example, if a NWDAF is deployed, the SMF may utilize the session management congestion message provided by the NWDAF to determine the backoff timer to be provided to the terminal.

As described above, NAS level congestion control may be considered, and DNN-based congestion control and S-NSSAI congestion control may be considered. Here, as an example, the NAS level congestion control described above may be applied to a terminal participating in the FL operation (or learning) (or a terminal selected for the FL operation (or learning)). As an example, a terminal participating in the FL operation (learning) may be switched to the CM-IDLE state while performing learning. The terminal needs to be switched to the CM-CONNECTED state to finish learning and transmit the training result to the server. Here, the terminal transmits a service request message to the AMF, but the AMF may apply NAS mobility management congestion control. Accordingly, the AMF may transmit a service reject message including mobility management back-off time information to the terminal, and the terminal may be switched to the CM-CONNECTED state after the backoff timer expires.

As another example, the user plane of the PDU session used to transmit the training result to the FL training server while the terminal participating in the FL operation (learning) performs learning may be deactivated. The terminal needs to activate the user plane of the PDU session to transmit the training result to the server when learning is finished. Accordingly, the terminal may transmit a service request message to the AMF. However, the AMF may apply NAS mobility management congestion control and transmit a service reject message including mobility management backoff timer information to the terminal. Here, the PDU session may be a PDU session used for AI/ML service/operation/traffic/application or a PDU session used for the FL operation (learning), and may not be limited to a specific form.

As another example, the terminal participating in a FL operation (learning) may need to change a PDU session to transmit a training result to a server. For example, a PDU session modification may be needed to modify the QoS (quality of service) of a PDU session or to add a QoS flow. Here, the terminal transmits a PDU session modification request message to the SMF, but the SMF may transmit a PDU session modification reject message including backoff timer information by applying DNN based congestion control or S-NSSAI based congestion control. Here, the PDU session may be a PDU session used for AI/ML services/operations/traffic/applications or a PDU session used for the FL operation (learning), and may not be limited to a specific form.

As described above, if the terminal postpones the transmission of the training result based on the backoff timer based on the NAS congestion control, the FL training server may not obtain the training result from the corresponding learning iteration. Accordingly, the FL training server may terminate the corresponding learning iteration without receiving the training result and perform a global model update. In other words, the FL training server shall skip the corresponding training result and perform a global model update, which may adversely affect model update convergence. As another example, the FL training server may wait while the terminal postpones transmission to receive the training result and terminate the learning iteration after receiving the training result, but this may cause a delay. As an example, the backoff timer value may be several (tens) minutes or several (tens) hours, but may not be limited thereto.

That is, in the above-described situation, since network congestion may affect the operation of AI/ML services/applications, a method of effectively supporting AI/ML services by considering the characteristics of AI/ML services may be necessary, which will be described below.

For example, a congestion control-related event support method considering an AI/ML services may be composed of a combination of one or more of the following operations/configurations/steps, and is not limited to a specific form.

For example, the AI/ML service may be used interchangeably with AI/ML-based service, AI/ML traffic, AI/ML application, AI/ML transmission, AI/ML operation, and AI/ML operational traffic below, and is not limited to a specific form.

In addition, as an example, it may be used interchangeably with the FL (Federated Learning) operation, FL training, FL training operation, and distributed learning operation below, and is not limited to a specific form.

In addition, UE (user equipment) and terminal may be used interchangeably below, but may not be limited thereto. In addition, as an example, AF (application function), AS (application server) and server may be used interchangeably and are not limited to a specific form. As an example, AF and AS may be AI/ML AF and AI/ML AS, but may not be limited thereto. As an example, although a congestion control-related event support method based on an AI/ML service is described below, it is not limited to the AI/ML service and may be applicable to other services and is not limited to a specific form.

As an example, the content described below may refer to, but may not be limited to, the operation of a 5G system (e.g., TS 23.501, TS 23.502, TS 23.503).

### AF provides AI/ML operation (or learning) related information to core network

The AF may provide AI/ML operation (or learning) related information to the core network. For example, the AI/ML operation (or learning) may be a FL operation (or learning), but may not be limited thereto.

Here, the AI/ML operation (or learning) related information may include at least one of the information in Table 2 below. For example, the information in Table 2 below may be included (or provided) based on any one of a combinatorial form, an explicit form, an implicit form, a compressive form, and other forms.

As a specific example, the AI/ML operation (or learning) related information may include information for identifying terminal(s) participating in the AI/ML operation (or learning). Here, when a plurality of terminals participate in the AI/ML operation (or learning), the information about the terminals participating in the AI/ML operation (or learning) may be information in the form of a terminal list. The information for identifying the terminal may be at least one of a generic public subscription identifier (GPSI)(s), a subscription permanent identifier (SUPI)(s), IP address(es) information, an external group ID, or other forms of identification information, but may not be limited thereto. In addition, as an example, the AI/ML operation (or learning) related information may include at least one of a start time, a required time, or an end time information of the AI/ML operation (or learning). As another example, the AI/ML operation (or learning) related information may include at least one of the expected start time, expected required time, or expected end time information of the AI/ML operation (or learning), but may not be limited thereto. In addition, as an example, the AI/ML operation (or learning) related information may include importance information of the AI/ML operation (or learning). As another example, the AI/ML operation (or learning) related information may include urgency information of the AI/ML operation (or learning). As an example, the importance information and the urgency information may be service requirements and may be provided as level information such as 'high/medium/low'. As another example, the importance information and the urgency information may be instruction information such as 'important/urgent', and are not limited to a specific form.

For example, the AF may provide AI/ML operation (or learning) related information to the core network together at the same time. As another example, the AF may provide AI/ML operation (or learning) related information at different times. As a specific example, the AF may first provide information 1), 2) and 5) of Table 2 below, and then provide information 4) when AI/ML operation (or learning) is actually completed. However, this is only one example for convenience of explanation and may not be limited thereto.

**[Table 2]**

| |
|---|
| 1) information for identifying UE(s) participating in AI/ML operation |
| 2) (expected) start time of AI/ML operation |
| 3) (expected) time required for AI/ML operation |
| 4) (expected) end time of AI/ML operation |
| 5) importance/urgency of AI/ML operation |

In addition, as an example, the AF may provide AI/ML operation (or learning) related information to the core network on its own. As another example, the AF may provide AI/ML operation (or learning) information to the core network based on a core network request.

Specifically, the core network may obtain AI/ML operation (or learning) related information from the AF as input. As another example, the core network may obtain AI/ML operation (or learning) related information from the AF through a request. As another example, the core network may obtain AI/ML operation (or learning) related information from the AF based on an event method.

As another example, the core network may obtain AI/ML operation (or learning) related information through a new procedure that is different from the existing procedure, and may not be limited to a specific form.

The AI/ML operation (or learning) related information may be utilized in a network function (NF) within a core network. Hereinafter, the AMF and SMF performing NAS level congestion control will be described, but may not be limited thereto. For example, the AI/ML operation (or learning) related information may be provided to at least one of the AMF or the SMF serving a terminal based on information for identifying terminal(s) participating in AI/ML operation (or learning) of Table 2. Here, at least one of the AMF or the SMF may recognize whether there are terminals participating in the same AI/ML operation (or learning) other than the terminal it serves based on information for identifying terminal(s) participating in AI/ML operation (or learning). In addition, if there are terminals participating in the same AI/ML operation (or learning) other than the terminals it serves, at least one of the AMF or the SMF may recognize which terminals it does not serve.

### Application of congestion control of AMF based on AI/ML operation (or learning) related information provided by AF

The AMF may receive (or acquire) AI/ML operation (or learning) related information provided by the AF. Then, the AMF may determine that congestion control is required based on the network congestion state and initiate it. Here, the AMF may receive the NAS message transmitted by the terminal. Then, the AMF may check whether the terminal is a terminal participating in the AI/ML operation (or learning). For example, if the terminal is a terminal that does not participate in the AI/ML operation (or learning), the AMF may apply the existing congestion control operation to the terminal. That is, the AMF may determine whether to apply the congestion control operation to the terminal by considering the network load.

On the other hand, if the terminal is a terminal participating in AI/ML operation (or learning), the AMF may check whether there are multiple terminals participating in the AI/ML operation (or learning). If there are multiple terminals participating in the AI/ML operation (or learning), the AMF may check whether it serves all of the terminals. If there is only one terminal participating in the AI/ML operation (or learning), the AMF may determine whether to apply congestion control based on the AI/ML operation (or learning) related information. For example, the AMF may determine to apply congestion control in the same way as before without considering the AI/ML operation (or learning) related information, and is not limited to a specific form.

On the other hand, if there are multiple terminals participating in the AI/ML operation (or learning) and the AMF serves all terminals, the AMF may determine whether to apply congestion control based on the AI/ML operation (or learning) related information. For example, the AMF may determine whether to apply congestion control by reflecting the states of other terminals other than the terminal that has transmitted the NAS message described above. The states of other terminals may be for checking whether there is a possibility of transmitting an NAS message from other terminals to the AMF. For example, the terminal state may be a CM-IDLE or a user plane deactivation state of a PDU session used for the AI/ML operation (or learning). If the terminal state is a CM-IDLE or a user plane deactivation state of a PDU session used for the AI/ML operation (or learning), the NAS message is likely to be transmitted.

For a more specific example, if the AMF determines that other terminals other than the terminal that has transmitted the NAS message are likely to transmit NAS messages based on the state information of other terminals, the AMF may determine to apply congestion control to all terminals. The AMF provides a backoff timer value to the terminals and may set the time value to be the same. For example, since the AMF may receive NAS messages from each terminal at different times, the AMF may set the backoff timer value so that the time at which the backoff timer expires is the same at all the terminals based on the backoff timer value, and may provide the terminals with the backoff timer value, but may not be limited thereto.

As another example, the AMF may determine that some or all of the terminals other than the terminal that has transmitted the NAS message are unlikely to transmit NAS messages. For example, if the user plane of the PDU session used for AI/ML operation (or learning) is in an active state, it may be determined that there is no possibility of transmitting the NAS message. In this case, the AMF may not apply congestion control to the terminal that has transmitted the NAS message.

As another example, a case may be considered where multiple terminals participate in AI/ML operation (or learning) but are not served by the same AMF. That is, the AMF may serve only some of the terminals participating in the AI/ML operation (or learning). The AMF may determine whether to apply congestion control based on AI/ML operation (or learning) related information. As a specific example, the AMF may determine not to apply congestion control to the terminal that has transmitted the NAS message. As another example, the AMF may determine to apply congestion control to the terminal that has transmitted the NAS message if the AI/ML operation (or learning) is deemed not to be important or urgent based on the AI/ML operation (or learning) related information.

### Application of congestion control of SMF based on AI/ML operation (or learning) related information provided by AF

The SMF may receive (or acquire) AI/ML operation (or learning) related information provided by the AF. Then, the SMF may determine that congestion control is required based on the network congestion state and initiate it. Here, the SMF may receive an NAS message transmitted by the terminal. Then, the SMF may check whether the terminal is a terminal participating in the AI/ML operation (or learning). For example, the SMF may check whether the received NAS message is associated with a PDU session used for the AI/ML operation (or learning) and corresponds to the congestion control being performed to check whether the terminal participates in the AI/ML operation (or learning).

If the terminal is a terminal that does not participate in the AI/ML operation (or learning), the SMF may apply the existing congestion control operation to the terminal. On the other hand, if the terminal is a terminal that participates in the AI/ML operation (or learning), the SMF may check whether there are multiple terminals in the AI/ML operation (or learning) in which the terminal participates. Here, if there are multiple terminals that participate in the AI/ML operation (or learning), the SMF may check whether it serves all of the terminals. For example, the SMF may check whether the SMF serves all terminals for the PDU session used for the AI/ML operation (or learning). In other words, the SMF serving the terminal may be serving the PDU session, but may not be limited thereto.

If there is only one terminal participating in AI/ML operation (or learning), the SMF may determine whether to apply congestion control based on the AI/ML operation (or learning) related information. Here, the SMF may determine whether to apply congestion control in the same way as before without considering the AI/ML operation (or learning) related information, but it may not be limited thereto.

On the other hand, if there are multiple terminals participating in AI/ML operation (or learning) and the SMF serves all terminals, the SMF may determine whether to apply congestion control based on AI/ML operation (or learning) related information. Here, the SMF may determine whether to apply congestion control by reflecting the state of other terminals other than the terminal that has transmitted the NAS message described above. For example, the state of other terminals may be Qos flow(s) included in the PDU session used for AI/ML operation (or learning), but may not be limited thereto.

For a more specific example, if the SMF determines that other terminals other than the terminal that has transmitted the NAS message have the possibility of transmitting the NAS message based on the state information of other terminals, the SMF may determine to apply congestion control to all terminals. Here, the SMF provides a backoff timer value to the terminals, and the time value may be set to the same value. For example, since the SMF may receive NAS messages from each terminal at different times, the SMF may set the backoff timer value so that the time at which the backoff timer expires is the same at all the terminals based on the backoff timer value, and may provide the terminals with the backoff timer value, but may not be limited thereto.

As another example, the SMF may determine that some or all of the terminals other than the terminal that has transmitted the NAS message are unlikely to transmit the NAS message. For example, if the PDU session used for AI/ML operation (or learning) already includes appropriate QoS flow(s), it may be determined that there is no possibility of transmitting the NAS message. In this case, the SMF may not apply congestion control to the terminal that has transmitted the NAS message.

As another example, a case may be considered where multiple terminals participate in AI/ML operation (or learning) but are not served by the same SMF. That is, the SMF may serve only some of the terminals participating in the AI/ML operation (or learning). Here, as an example, the SMF may determine whether to apply congestion control based on the AI/ML operations (or learning) related information. As an example, the SMF may determine not to apply congestion control to the terminal that has transmitted the NAS message.

As another example, the SMF may determine to apply congestion control to the terminal that has transmitted the NAS message if the AI/ML operation (or learning) is deemed not to be important or urgent based on the AI/ML operation (or learning) related information.

For example, the SMF applying congestion control to the terminal may mean that it applies congestion control to the terminal's PDU session.

Based on the above, it is possible to effectively support AI/ML services by determining whether to apply congestion control to a terminal participating in AI/ML operation (or learning) based on AI/ML operation (or learning) related information provided from the AF.

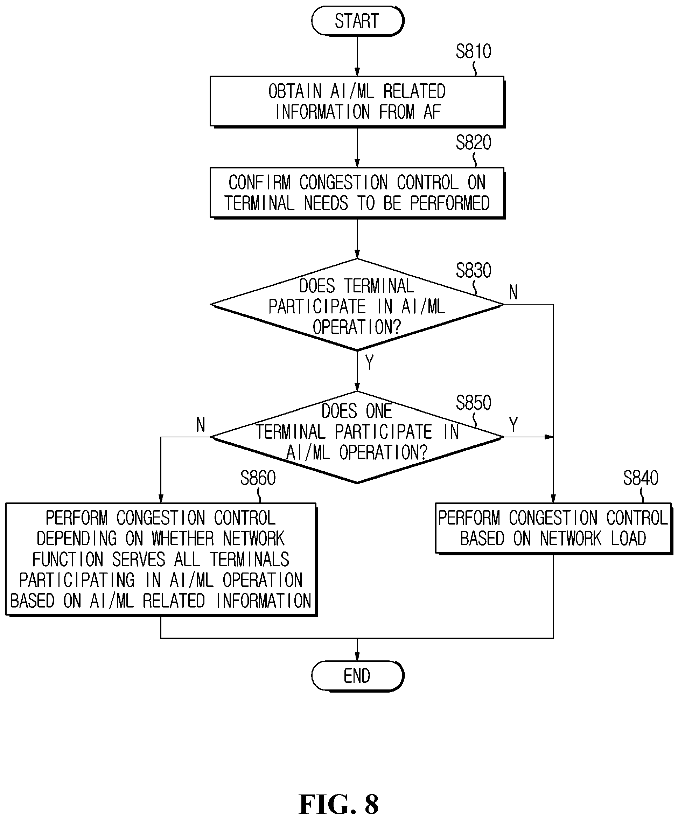

FIG. 8 is a diagram showing a method of performing congestion control in a network function applicable to the present disclosure.

Referring to FIG. 8, the network function may obtain AI/ML related information from the AF. (S810) For example, the network function may be the AMF or SMF described above, but may not be limited thereto. In addition, the network function may obtain AI/ML related information directly from the AF or through another network function, and is not limited to a specific form.

The network function may confirm that congestion control on the terminal needs to be performed. (S820) For example, the network function may consider whether the terminal participates in the AI/ML operation. (S830) If the terminal does not participate in the AI/ML operation, the network function may perform congestion control by considering the network load in the same way as the existing congestion control. (S840) On the other hand, if the terminal participates in the AI/ML operation, the network function may check whether the terminal participating in the AI/ML operation is only one of the terminals described above. (S850) Here, if only the corresponding terminal participates in the AI/ML operation, the network function may perform congestion control by considering the network load in the same way as the existing congestion control. (S840) On the other hand, if multiple terminals participate in the AI/ML operation, the network function may check whether it serves all of the terminals participating in the AI/ML operation based on AI/ML related information and perform congestion control accordingly. (S860)

When there are multiple terminals participating in AI/ML operations and a network function serves all of the multiple terminals, the network function may determine whether to perform congestion control on the terminals by reflecting AI/ML related information and state information of other terminals. Here, as an example, the network function may be an AMF. When other terminals are in either CM-IDLE or user plane deactivation of AI/ML operation related PDU based on the state information of other terminals, the AMF may determine to perform congestion control on the multiple terminals based on the possibility of transmitting the NAS message.

In addition, when performing congestion control on multiple terminals, the AMF may set a backoff timer value for each of the multiple terminals so that the transmission delay termination time points of the multiple terminals are the same and transmit it to each of the multiple terminals. On the other hand, when the other terminals are in one of CM-CONNECTED and user plane activation of AI/ML operation related PDUs based on the state information of the other terminals, the AMF may determine not to perform congestion control on the terminal based on the possibility of transmitting the NAS message.

As another example, the network function may be an SMF. The SMF may determine whether a terminal participates in AI/ML operation based on whether an NAS message transmitted by the terminal is associated with a PDU session of AI/ML operation. In addition, the SMF may determine the possibility of transmitting the NAS message based on the QoS flows included in the PDU sessions used by other terminals for AI/ML operation, as state information of other terminals. The SMF may determine to perform congestion control on multiple terminals based on the possibility of transmitting the NAS message.

Here, when performing congestion control on multiple terminals, the SMF may set a backoff timer value for each of the multiple terminals so that the transmission delay termination time points of the multiple terminals are the same and transmit it to each of the multiple terminals.

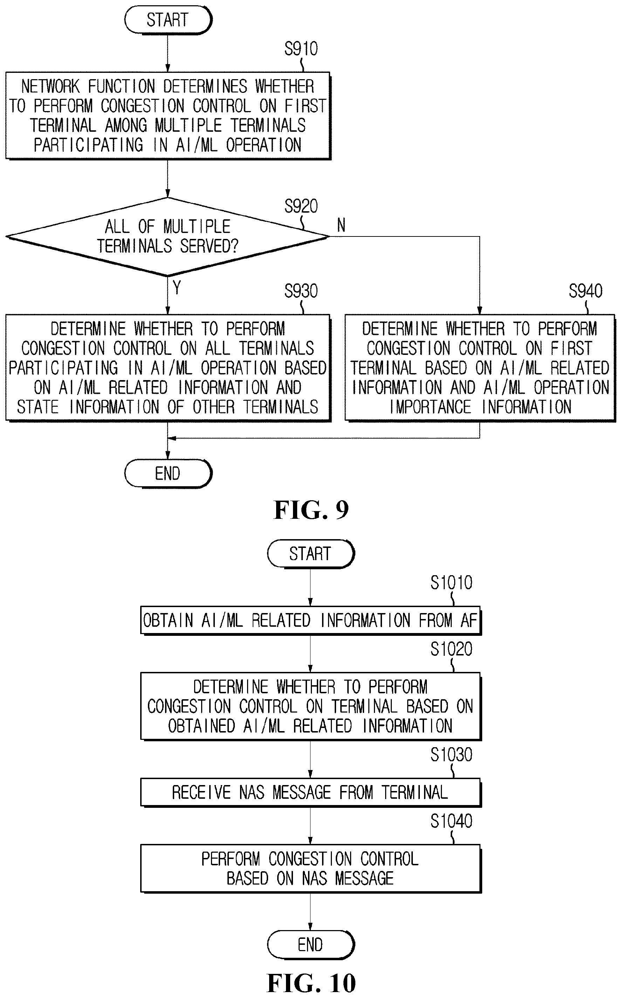

FIG. 9 is a diagram showing a method of performing congestion control in a network function applicable to the present disclosure. Referring to FIG. 9, the network function may determine whether to perform congestion control on a first terminal among multiple terminals participating in AI/ML operation. (S910) For example, in the case of performing congestion control on a terminal as in FIG. 8, if there are multiple terminals in the AI/ML operation in which the terminal participated, the network function may determine whether to perform congestion control. Here, the network function may check whether it serves all of the multiple terminals. (S920) Here, if the network function serves all of the multiple terminals, the network function may determine whether to perform congestion control on all terminals participating in the AI/ML operation based on the AI/ML related information and the state information of other terminals. (S930) On the other hand, if the network function serves only some of the multiple terminals, the network function may determine whether to perform congestion control on the first terminal based on the AI/ML related information and the AI/ML operation importance information. (S940) As another example, if the network function serves only some of the multiple terminals, the network function may not apply congestion control to the first terminal, as described above.

For example, the AI/ML related information may include at least one of identification information of a terminal participating in AI/ML operation, AI/ML operation start time information, AI/ML operation required time information, AI/ML operation end time information, or AI/ML operation importance information, as described in Table 2 above. In addition, at least one information included in the AI/ML related information may be sent to the core network at the same time. As another example, some information of at least one information included in the AI/ML related information may be sent to the core network at a first time point, and the other information may be sent to the core network at a second time point, as described above.

FIG. 10 is a diagram showing a method of performing congestion control in a network function applicable to the present disclosure.

Referring to FIG. 10, the network function may obtain AI/ML related information from the AF. (S1010) The network function may determine whether to perform congestion control on the terminal based on the obtained AI/ML related information. (S1020) The network function may receive an NAS message from the terminal (S1030) and perform congestion control based on the received NAS message. (S1040) For example, when congestion control on the terminal is performed, the network function may transmit a reject message including a backoff timer value to the terminal.

Here, as an example, if the terminal is a terminal that does not participate in the AI/ML operation, the network function may determine whether to perform congestion control on the terminal by considering the network load. That is, if the terminal does not participate in the AI/ML operation, the network function may perform congestion control in the same way as before. On the other hand, if the terminal is a terminal that participates in the AI/ML operation, the network function may determine whether to perform congestion control on the terminal by considering whether there are multiple terminals participating in the AI/ML operation and whether the network function serves multiple terminals.

Here, if there is only one terminal participating in the AI/ML operation, the network function may determine whether to perform congestion control on the terminal regardless of the AI/ML operation related information. In other words, the network function may perform congestion control in the same way as before. On the other hand, if there are multiple terminals participating in the AI/ML operation and the network function serves all of the multiple terminals, the network function may determine whether to perform congestion control on the terminal by reflecting the AI/ML related information and the state information of other terminals.

Here, as an example, the network function may be an AMF. Based on the state information of other terminals, if other terminals are in either CM-IDLE or user plane deactivation of AI/ML operation related PDU, AMF may determine to perform congestion control on multiple terminals based on the possibility of transmitting the NAS message.

In addition, when performing congestion control on multiple terminals, the AMF may set a backoff timer value for each of the multiple terminals so that the transmission delay termination time points of the multiple terminals are the same and transmit it to each of the multiple terminals. On the other hand, when the other terminals are in one of CM-CONNECTED and user plane activation of AI/ML operation related PDUs based on the state information of the other terminals, the AMF may determine not to perform congestion control on the terminal based on the possibility of transmitting the NAS message.

As another example, the network function may be an SMF. The SMF may determine whether a terminal participates in AI/ML operation based on whether an NAS message transmitted by the terminal is associated with a PDU session of AI/ML operation. In addition, the SMF may determine the possibility of transmitting the NAS message based on the QoS flows included in the PDU sessions used by other terminals for AI/ML operations, as state information of other terminals. The SMF may determine to perform congestion control on multiple terminals based on the possibility of transmitting the NAS message.

Here, when performing congestion control on multiple terminals, the SMF may set a backoff timer value for each of the multiple terminals so that the transmission delay termination time points of the multiple terminals are the same and transmit it to each of the multiple terminals.

As another example, if multiple terminals participate in AI/ML operation and the network function serves only some of the multiple terminals, the network function may determine not to perform congestion control on the terminal based on AI/ML related information. As another example, if multiple terminals participate in AI/ML operation and the network function serves only some of the multiple terminals, the network function may determine whether to perform congestion control on the terminal based on AI/ML related information and AI/ML operation importance information.

For example, the AI/ML related information may include at least one of identification information of a terminal participating in AI/ML operation, AI/ML operation start time information, AI/ML operation required time information, AI/ML operation end time information, or AI/ML operation importance information, as described in Table 2 above. In addition, at least one information included in the AI/ML related information may be sent to the core network at the same time. As another example, some information of the at least one information included in the AI/ML related information may be sent to the core network at a first time point, and the other information may be transmitted to the core network at a second time point, as described above.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method of operating a network function in a wireless communication system, the method comprising:
obtaining artificial intelligence (AI)/machine learning (ML) related information from an application function (AF);
determining whether to perform congestion control on a first terminal based on the obtained AI/ML related information;
receiving a non-access stratum (NAS) message from the first terminal; and
performing congestion control based on the NAS message,
wherein whether to perform congestion control on the first terminal is determined based on whether the first terminal participates in AI/ML operation.

2. The method of claim 1,
wherein based on the first terminal being a terminal that does not participate in AI/ML operation, the network function determines whether to perform congestion control on the first terminal by considering a network load, and
wherein based on the first terminal being a terminal participating in the AI/ML operation, the network function determines whether to perform congestion control on the first terminal by considering whether there are multiple terminals participating in the AI/ML operation and whether the network function serves multiple terminals.

3. The method of claim 2, wherein based on a terminal participating in the AI/ML operation being only the first terminal, whether to perform congestion control on the first terminal is determined regardless of the AI/ML operation related information.

4. The method of claim 2, wherein based on there being multiple terminals participating in the AI/ML operation and the network function serving all the multiple terminals, the network function determines whether to perform congestion control on the first terminal by reflecting the AI/ML related information and state information of other terminals.

5. The method of claim 4,
wherein the network function is an access and mobility management function (AMF), and
wherein based on the state information of the other terminals and the other terminals being in any one of CM-IDLE and user plane deactivation of AI/ML operation related protocol data unit (PDU), the AMF determines whether to perform congestion control on multiple terminals based on a possibility of transmitting an NAS message.

6. The method of claim 5, wherein based on the congestion control being performed on the multiple terminals, the AMF sets a backoff timer value for each of the multiple terminals so that transmission delay termination time points of the multiple terminals are the same and transmits the backoff timer value to each of the multiple terminals.

7. The method of claim 5, wherein based on the other terminals being in any one of CM-CONNECTED and user plane activation of AI/ML operation related protocol data unit (PDU), the AMF determines not to perform congestion control on the first terminal based on the possibility of transmitting the NAS message.

8. The method of claim 4,
wherein the network function is a session management function (SMF), and
wherein based on whether the NAS message transmitted by the first terminal being associated with a PDU session of AI/ML operation, the SMF determines whether the first terminal participates in the AI/ML operation.

9. The method of claim 8,
wherein the SMF determines a possibility of transmitting an NAS message based on quality of service (QoS) flows included in PDU sessions used by the other terminals for the AI/ML operation as state information of the other terminals, and
wherein the SMF determines to perform congestion control on multiple terminals based on the possibility of transmitting the NAS message.

10. The method of claim 9, wherein based on the congestion control being performed on the multiple terminals, the SMF sets a backoff timer value for each of the multiple terminals so that transmission delay termination time points of the multiple terminals are the same and transmits the backoff timer value to each of the multiple terminals.

11. The method of claim 1, wherein based on multiple terminals participating in the AI/ML operation and the network function serving only some of the multiple terminals, the network function determines not to perform congestion control on the first terminal based on the AI/ML related information.

12. The method of claim 1, wherein based on multiple terminals participating in the AI/ML operation and the network function serving only some of the multiple terminals, the network function determines whether to perform congestion control on the first terminal based on the AI/ML related information and AI/ML operation importance information.

13. The method of claim 1, wherein the AI/ML information includes at least one of identification information of a terminal participating in AI/ML operation, AI/ML operation start time information, AI/ML operation required time information, AI/ML operation end time information, or AI/ML operation importance information.

14. The method of claim 13, wherein at least one information included in the AI/ML related information is sent to a core network at the same time.

15. The method of claim 14, wherein some information of at least one information included in the AI/ML related information is sent to the core network at a first time point, and the other information is sent to the core network at a second time point.

16. A network function operating in a wireless communication system, comprising:
at least one transceiver;
at least one processor; and
at least one memory operably connected to the at least one processor and configured to store instructions that, when executed, cause the at least one processor to perform a specific operation,
wherein the specific operation:
obtains artificial intelligence (AI)/machine learning (ML) related information from an application function (AF);
determines whether to perform congestion control on a first terminal based on the obtained AI/ML related information;
controls the at least one transceiver to receive a non-access stratum (NAS) message from the first terminal; and
performs congestion control based on the NAS message,
wherein whether to perform congestion control on the first terminal is determined based on whether the first terminal participates in AI/ML operation.

17. A method of operating a terminal in a wireless communication system, the method comprising:
transmitting, by the terminal, an NAS message to a network function; and
receiving a response message from the network function based on whether to perform congestion control on the terminal,
wherein the network function obtains AI/ML related information from an AF and determines whether to perform congestion control on the terminal based on whether the terminal participates in AI/ML operation.

18. A terminal operating in a wireless communication system, comprising:
at least one transceiver;
at least one processor; and
at least one memory operably connected to the at least one processor and configured to store instructions that, when executed, cause the at least one processor to perform a specific operation,
wherein the specific operation:
controls the at least one transceiver such that the terminal transmits an NAS message to a network function; and
controls the at least one transceiver to receive a response message from the network function based on whether to perform congestion control on the terminal,
wherein the network function obtains AI/ML related information from an AF and determines whether to perform congestion control on the terminal based on whether the terminal participates in AI/ML operation.

19. A device comprising at least one memory and at least one processor functionally connected to the at least one memory, wherein the at least one processor controls the device to:
obtain artificial intelligence (AI)/machine learning (ML) related information from an application function (AF);
determine whether to perform congestion control on another device based on the obtained AI/ML related information;
receive a non-access stratum (NAS) message from another device; and
perform congestion control based on the NAS message,
wherein whether to perform congestion control on another device is determined based on whether another device participates in AI/ML operation.

20. A non-transitory computer-readable medium storing at least one instruction, the non-transitory computer-readable recording medium comprising the at least one instruction executable by a processor,
wherein the at least one instruction controls a device to:
obtain artificial intelligence (AI)/machine learning (ML) related information from an application function (AF);
determine whether to perform congestion control on another device based on the obtained AI/ML related information;
receive a non-access stratum (NAS) message from another device; and
perform congestion control based on the NAS message,
wherein whether to perform congestion control on another device is determined based on whether another device participates in AI/ML operation.
